# EUROPÄISCHE PATENTANMELDUNG

(11) **EP 1 262 250 A2**
(43) Veröffentlichungstag der Anmeldung: **04.12.2002**
(21) Anmeldenummer: 02291147.3
(22) Anmeldetag: 06.05.2002
(51) Int. Cl.: B21C 37/15

(54) **Vorrichtung zur kontinuierlichen Herstellung eines schraubenlinienförmig gewellten Metallrohres**

(30) Priorität: 31.05.2001 DE 10126399
(71) Anmelder: Nexans, 75008 Paris (FR)
(72) Erfinder: Meyer, Michael, 30938 Burgwedel (DE); Frohne, Christian, Dr. Dipl.-Ing., 30657 Hannover (DE); Harten, Friedrich, Dipl.-Ing., 31655 Stadthagen (DE)
(74) Vertreter: Döring, Roger, Dipl.-Ing.

(57) **Zusammenfassung**

Es wird eine Vorrichtung zur kontinuierlichen Herstellung eines schraubenlinienförmig gewellten Metallrohres (12,14) angegeben, die aus einem drehantreibbaren Wellerkopf (11) besteht, in welchem ein Wellwerkzeug (16) exzentrisch zur Längsachse des Metallrohres (12,14) frei drehbar gelagert ist. Das Wellwerkzeug (16) ist zumindest eine Scheibe, deren exzentrische Lage zur Längsachse des Metallrohres (12,14) verstellbar ist und die sich mit ihrer Umfangsfläche auf dem Metallrohr (12,14) abwälzt.

## Beschreibung

Die vorliegende Erfindung betrifft eine Vorrichtung zur kontinuierlichen Herstellung eines schraubenlinienförmig gewellten Metallrohres nach dem Oberbegriff des Anspruchs 1.

Aus der DE 1 086 314 A ist eine Vorrichtung zum Wellen des Mantels eines elektrischen Kabels bekannt, bei welcher ein drehbares ringförmiges Wellwerkzeug, durch dessen Öffnung das Kabel geführt wird, vorgesehen ist. Die Achse des Wellwerkzeugs ist seitlich zur Mantelachse verschoben, wobei die Summe dieser Verschiebung und der äußere Radius des ungewellten Mantels größer ist als der Radius der Öffnung des Wellwerkzeuges. Die Achse des ringförmigen Wellwerkzeuges ist mit Bezug auf die Mantelachse geneigt. Das Wellwerkzeug ist in einem Lager gelagert, das eine Drehung des Wellwerkzeuges um seine eigene Achse ermöglicht. Das Lager ist in einem drehantreibbaren Wellerkopf gelagert, der sich um die Mantelachse dreht.

Bei dieser bekannten Vorrichtung wälzt sich das Wellwerkzeug mit seiner inneren Oberfläche auf dem Mantel ab und erzeugt infolge seiner exzentrischen Lagerung in dem Wellerkopf eine Wellung in dem Mantel. Das Wellwerkzeug ist mit dem Mantel nur über einen kurzen Bogen in Berührung. Die Reibung zwischen dem Wellwerkzeug und dem Mantel ist eine rollende Reibung.

Die Verformungsrippe des Wellwerkzeuges ist beim Wellvorgang starken mechanischen Belastungen ausgesetzt. Deshalb ist es erforderlich, daß insbesondere bei der Herstellung von tiefgewellten Rohren die Wanddicke der Verformungsrippe ein gewisses Maß nicht unterschreiten darf.

Der vorliegenden Erfindung liegt die Aufgabe zugrunde, die Vorrichtung der eingangs erwähnten Art dahingehend zu verbessern, daß damit Rohre mit einer geringen Wellsteigung, insbesondere Rohre, deren Außendurchmesser weniger als 6 mm beträgt, herstellbar sind.

Diese Aufgabe wird durch die im Kennzeichen des Anspruchs 1 erfaßten Merkmale gelöst.

Nach einer besonders vorteilhaften Ausgestaltung der erfindungsgemäßen Vorrichtung sind zwei oder mehrere scheibenförmige Wellwerkzeuge über den Umfang verteilt innerhalb des Wellerkopfes angeordnet. Die Scheiben können so in axialem Abstand zueinander im Wellerkopf angeordnet sein, daß jede Scheibe in das von der vor ihr liegenden Scheibe erzeugte Wellental eintaucht und jede folgende Scheibe die Welltiefe vergrößert.

Andererseits können mehrere Scheiben auch so angeordnet sein, daß sie eine mehrgängige Schraubenwellung erzeugen.

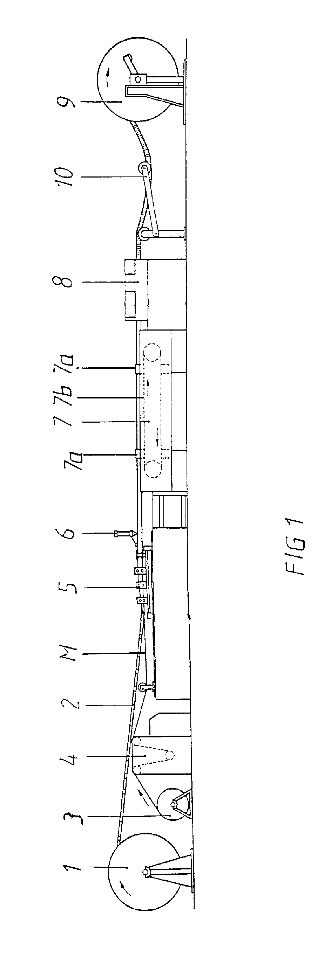

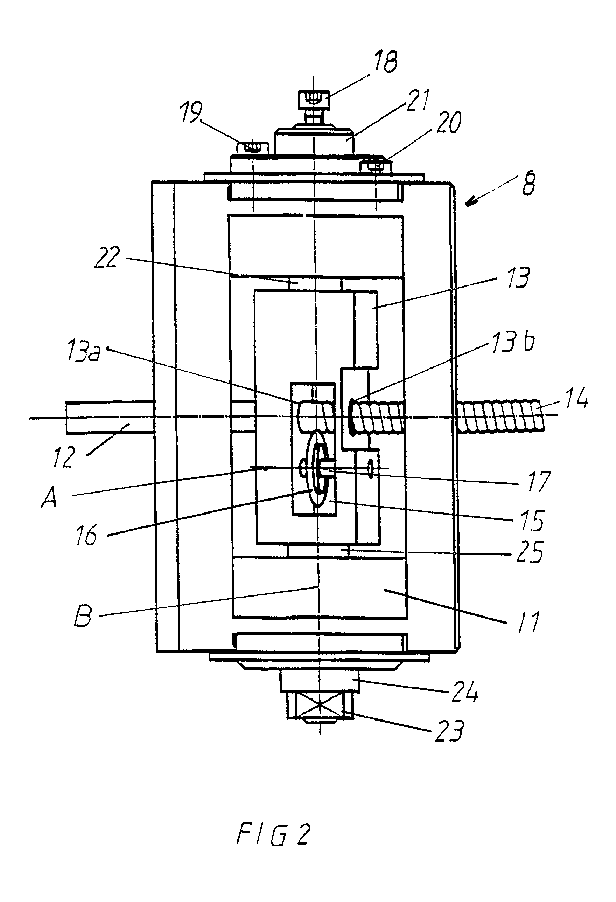

Die Erfindung ist anhand der in den Figuren 1 und 2 schematisch dargestellten Ausführungsbeispiele näher erläutert.

In der Figur 1 ist eine seitliche Ansicht einer Anlage zur Herstellung eines von einem gewellten Metallrohr umgebenen Lichtwellenleiters aus Kunststoff dargestellt.

Von einer Vorratsspule 1 wird der Kunststofflichtwellenleiter 2 kontinuierlich abgezogen. Ein Metallband M, vorzugsweise ein Kupferband wird von einer Bandspule 3 abgezogen und in einer Reinigungsanlage 4 gereinigt. Das Metallband M wird dann in einer Formvorrichtung 5, die aus mehreren nicht näher bezeichneten Formstufen besteht, zu einem den Lichtwellenleiter 2 umgebenden Schlitzrohr geformt. Der Längsschlitz wird in einer Schweißeinrichtung 6 verschweißt. Der Innendurchmesser des geschweißten Rohres ist etwas größer als der Außendurchmesser des Lichtwellenleiters 2, damit der Kunststofflichtwellenleiter 2 nicht durch die Schweißwärme beeinträchtigt wird. Wird als Schweißvorrichtung 6 eine Laserschweißvorrichtung eingesetzt, kann auf die Bandreinigungsanlage 3 verzichtet werden. Mittels eines Spannzangenabzugs 7 wird das geschweißte Rohr sowie der Lichtwellenleiter 2 in Richtung der Pfeile durch die Anlage transportiert. Der Spannzangenabzug 7 weist mehrere Spannbackenpaare 7a auf, die das geschweißte Rohr zangenförmig umfassen. Die Spannbackenpaare 7a sind auf einer endlosen Kette 7b befestigt, die in nicht dargestellter Weise von einem Elektromotor angetrieben wird.

In Durchlaufrichtung gesehen hinter dem Spannzangenabzug 7 ist die Wellvorrichtung 8 angeordnet, in welcher aus dem glatten Metallrohr ein gewelltes Metallrohr erzeugt wird, dessen Wellentäler eng auf dem Lichtwellenleiter aufsitzen.

Der mit dem gewellten Metallrohr versehene Lichtwellenleiter 2 wird abschließend auf eine Kabeltrommel 9 aufgewickelt. Eine Tänzeranordnung 10 regelt die Abzugsgeschwindigkeit der Kabeltrommel 9.

Auf das gewellte Metallrohr kann abschließend in nicht dargestellter Weise ein Kunststoffaußenmantel aufextrudiert werden.

Die Wellvorrichtung 8 ist anhand der Figur 2 näher beschrieben.

Die Wellvorrichtung 8 besteht aus dem Wellerkopf 11, der von einem nicht mehr dargestellten Motor z. B. einem Hohlwellenmotor um die Längsachse des zu wellenden Glattrohres 12 angetrieben wird. In dem Wellerkopf 1 1 ist ein Gehäuse 13 angeordnet, welches eine erste Öffnung 13a zum Durchführen des Glattrohres 12 und eine zweite Öffnung 13b zum Durchführen des gewellten Rohres 14 aufweist. In einer Ausnehmung 15 ist das Wellwerkzeug 16 untergebracht, welches auf einem in dem Gehäuse 13 befestigten Zapfen 17 frei drehbar gelagert ist. Das Gehäuse 13 ist in dem Wellerkopf 11 um die Achse B schwenkbar angeordnet, so daß die Drehachse A des Wellwerkzeuges 16 winklig zur Längsachse des Metallrohres 12 bzw. 14 verläuft.

Das Wellwerkzeug 16 ist eine Scheibe, welche um das Glattrohr 12 umläuft. Um das Glattrohr 12 mit einer Wellung zu versehen, wird das Gehäuse 13 und mit ihm die Scheibe 16 in Richtung auf das Glattrohr 12 verstellt. Bei umlaufendem Wellerkopf 11 wälzt sich die Umfangsfläche der Scheibe 16 auf der Oberfläche des Rohres 12 ab und erzeugt dabei eine schraubenlinienförmig verlaufende Wellung.

Für die Verstellung des Gehäuses 13 sowohl in Richtung der Achse B als auch der Drehung des Gehäuses 13 um die Achse B werden zunächst die Schrauben 18, 19 und 20 gelöst. Durch Drehung der Gewindemutter 21 wird das mit einer Gewindestange 22 verbundene Gehäuse 13 in Richtung der Achse B verschoben und dadurch die gewünschte Welltiefe eingestellt.

Nach dem Lösen der Mutter 23 kann der Grad der Schwenkung des Gehäuses 13 um die Achse B durch Drehen des Elementes 24, welches über einen Bolzen 25 mit dem Gehäuse 13 verbunden ist, exakt eingestellt werden. Durch die Schwenkung des Gehäuses 13 um die Achse B wird die Steigung der schraubenlinienförmigen Wellung im Verhältnis zur Abzugsgeschwindigkeit optimal eingestellt.

Nachdem das Gehäuse 13 exakt eingestellt ist, werden die Muttern 23, 18, 19 und 20 wieder angezogen.

Beim Wellvorgang tritt zwischen der Umfangsfläche der Scheibe 16 und der Rohrwandung eine rollende Reibung auf, so daß die Rohroberfläche nicht beschädigt wird. Um die Standzeit der Scheibe 16 zu erhöhen, wird zumindest die Umfangsfläche der Scheibe gehärtet.

## Patentansprüche

1. Vorrichtung zur kontinuierlichen Herstellung eines schraubenlinienförmig gewellten Metallrohres, bestehend aus einem drehantreibbaren Wellerkopf, in welchem ein Wellwerkzeug exzentrisch zur Längsachse des Metallrohres frei drehbar gelagert ist, **dadurch gekennzeichnet, daß** das Wellwerkzeug (16) zumindest eine Scheibe ist, deren exzentrische Lage zur Längsachse des Metallrohres (12,14) verstellbar ist und die sich mit ihrer Umfangsfläche auf dem Metallrohr (12,14) abwälzt.

2. Vorrichtung nach Anspruch 1, **dadurch gekennzeichnet, daß** die Drehachse A der Scheibe winklig zur Längsrichtung des Metallrohres (12,14) verläuft.

3. Vorrichtung nach Anspruch 1 oder 2, **dadurch gekennzeichnet, daß** die Scheibe in einem Gehäuse (13) mit einer Durchtrittsöffnung für das Metallrohr (12,14) frei drehbar gelagert ist, und das Gehäuse (13) in dem Wellerkopf (11) in Richtung auf das Metallrohr (12,14) verschiebbar und um eine senkrecht zur Längsachse des Metallrohres (12,14) verlaufende Achse B schwenkbar ist.

4. Vorrichtung nach einem der Ansprüche 1 bis 3, **dadurch gekennzeichnet, daß** zumindest die Umfangsfläche der Scheibe gehärtet ist.

5. Vorrichtung nach einem der Ansprüche 1 bis 4, **dadurch gekennzeichnet, daß** die Verschiebung des Gehäuses (13) durch zumindest eine durch die Wandung des Wellerkopfes (11) hindurchgeführte Gewindespindel erfolgt.
